# EUROPEAN PATENT APPLICATION

(11) **EP 3 979 014 A1**
(43) Date of publication of application: **06.04.2022**
(21) Application number: 20814761.1
(22) Date of filing: 14.02.2020
(51) Int. Cl.: G05B 19/05

(54) **CONTROL SYSTEM, SUPPORT DEVICE, AND SUPPORT PROGRAM**

(30) Priority: 29.05.2019 JP 2019100578
(71) Applicant: OMRON Corporation, Shiokoji-dori, Shimogyo-ku Kyoto-shi Kyoto 600-8530 (JP)
(72) Inventor: KAWAI, Ko, Kyoto-shi, Kyoto 600-8530 (JP)
(74) Representative: Mewburn Ellis LLP
(86) International application number: PCT/JP2020/005784
(87) International publication number: WO 2020/240944

(57) **Abstract**

To achieve a configuration in which necessary anomaly detection can be arranged in a necessary location. A control system configured to control a control target includes a plurality of processing resources (30-1 to 30-6) available for execution of arithmetic processing. The plurality of processing resources include collection means (32) that collects one or a plurality of state values corresponding to a detection target included in the control target, and anomaly detection means (34) that calculates a value indicating a possibility that an anomaly has occurred in the detection target based on a feature value calculated from the one or plurality of state values having been collected. Each of the collection means and the anomaly detection means is capable of being arranged in a processing resource among the plurality of processing resources.

## Description

### TECHNICAL FIELD

The present invention relates to a control system capable of detecting any anomaly that can occur in a detection target, a support device used in the control system, and a support program for realizing the support device.

### BACKGROUND ART

In various production sites, there is a need to improve a facility operation rate by predictive maintenance of machines and devices. The predictive maintenance means a maintenance style in which any anomaly occurring in a machine or a device is detected, and maintenance work such as adjustment or replacement is performed before the facility needs to be stopped.

In order to implement the predictive maintenance, it is necessary to construct a mechanism for collecting state values of a machine or a device and determining whether any anomaly has occurred in the machine or the device on the basis of the collected state values.

For example, Japanese Patent Laying-Open No. 2018-097662 (PTL 1) discloses a technique capable of monitoring a phenomenon occurring in a control target in a shorter cycle.

### CITATION LIST

### PATENT LITERATURE

PTL 1: Japanese Patent Laying-Open No. 2018-097662

### SUMMARY OF INVENTION

### TECHNICAL PROBLEM

As disclosed in Japanese Patent Laying-Open No. 2018-097662 (PTL 1), a relatively large number of resources are required to monitor a phenomenon occurring in the control target in a shorter cycle. However, an existing control device may not be able to secure sufficient resources required for anomaly detection.

One object of the present invention is to achieve a configuration in which necessary anomaly detection can be arranged in a necessary location.

### SOLUTION TO PROBLEM

In an example of the present invention, a control system configured to control a control target is provided. The control system includes a plurality of processing resources available for execution of arithmetic processing. The plurality of processing resources include collection means configured to collect one or a plurality of state values corresponding to a detection target included in the control target, and anomaly detection means configured to calculate a value indicating a possibility that an anomaly has occurred in the detection target based on a feature value calculated from the one or plurality of state values having been collected. Each of the collection means and the anomaly detection means is capable of being arranged in a processing resource among the plurality of processing resources.

In this configuration, when the processing resources are insufficient, anomaly detection can be arranged in a necessary part.

The anomaly detection means may generate a determination result indicating whether an anomaly has occurred in the detection target based on a value indicating the possibility that an anomaly has occurred in the detection target. In this configuration, by referring to the determination result, necessary processing can be executed when the anomaly has occurred in the detection target.

In a case where the collection means and the anomaly detection means are arranged in different processing resources, the anomaly detection means may transmit the determination result having been generated to the processing resource in which the collection means is arranged. In this configuration, the plurality of processing resources can cooperate to implement the anomaly detection processing.

In the case where the collection means and the anomaly detection means are arranged in different processing resources, the collection means may transmit the one or plurality of state values having been collected to the processing resource in which the anomaly detection means is arranged. This configuration makes it possible to easily obtain a result of the anomaly detection in a processing resource that collects the one or plurality of state values.

In the case where the collection means and the anomaly detection means are arranged in different processing resources, the anomaly detection means may transmit the value having been calculated and indicating the possibility that an anomaly has occurred in the detection target to the processing resource in which the collection means is arranged. In this configuration, it is possible to easily obtain a value indicating the possibility that an anomaly has occurred in the detection target in the processing resource that collects the one or plurality of state values.

The control system may further include a support device configured to support determination of a processing resource to be an arrangement destination of the collection means and the anomaly detection means. In this configuration, the anomaly detection processing can easily be implemented in the control system by using the support device.

The support device may determine the arrangement destination of the collection means and the anomaly detection means based on at least one of the number of state values to be collected by the collection means, a collection destination of the state values, a specification of the plurality of processing resources, a load factor of an internal bus, or a load factor of a network. In this configuration, the anomaly detection processing can be appropriately implemented on the basis of one or a plurality of factors.

The support device may transmit necessary data to a processing resource in which the collection means and the anomaly detection means are to be arranged. In this configuration, data necessary for implementing the anomaly detection processing in the control system can be easily arranged.

Another example of the present invention can provide a support device used in the control system configured to control the control target. The control system includes a plurality of processing resources available for execution of arithmetic processing. The plurality of processing resources include collection means configured to collect one or a plurality of state values corresponding to a detection target included in the control target, and anomaly detection means configured to calculate a value indicating a possibility that an anomaly has occurred in the detection target based on a feature value calculated from the one or plurality of state values having been collected. The support device provides a user interface configured to support determination of a processing resource to be an arrangement destination of the collection means and the anomaly detection means.

In this configuration, the anomaly detection processing can be easily implemented by using one or a plurality of processing resources included in the control system.

Still another example of the present invention can provide a support program configured to realize the support device used in the control system configured to control the control target. The control system includes a plurality of processing resources available for execution of arithmetic processing. The plurality of processing resources include collection means configured to collect one or a plurality of state values corresponding to a detection target included in the control target, and anomaly detection means configured to calculate a value indicating a possibility that an anomaly has occurred in the detection target based on a feature value calculated from the one or plurality of state values having been collected. The support program causes the computer to implement a function of providing a user interface configured to support determination of a processing resource to be an arrangement destination of the collection means and the anomaly detection means.

In this configuration, the anomaly detection processing can be easily implemented by using one or a plurality of processing resources included in the control system.

### ADVANTAGEOUS EFFECTS OF INVENTION

The present invention allows necessary anomaly detection to be arranged in a necessary location.

### BRIEF DESCRIPTION OF DRAWINGS

Fig. 1 is a schematic diagram illustrating a main part of a control system according to an embodiment.
Fig. 2 is a schematic diagram illustrating a configuration example of the control system according to the embodiment.
Fig. 3 is a block diagram illustrating a hardware configuration example of a control unit constituting a control device according to the embodiment.
Fig. 4 is a block diagram illustrating a hardware configuration example of an auxiliary processing unit constituting the control device according to the embodiment.
Fig. 5 is a block diagram illustrating a hardware configuration example of a support device used in the control system according to the embodiment.
Fig. 6 is a block diagram illustrating a configuration example for implementing an anomaly detection function in the control system according to the embodiment.
Fig. 7 is a time chart for describing an execution cycle of control arithmetic operation in the control device according to the embodiment.
Fig. 8 is a schematic diagram illustrating an implementation example of the anomaly detection function in the control system according to the embodiment.
Fig. 9 is a schematic diagram illustrating another implementation example of the anomaly detection function in the control system according to the embodiment.
Fig. 10 is a schematic diagram illustrating still another implementation example of the anomaly detection function in the control system according to the embodiment.
Fig. 11 is a flowchart illustrating an example of a system design procedure in the control system according to the embodiment.
Fig. 12 is a diagram for describing an example of a guideline for determining an implementation example of the anomaly detection function in the control system according to the embodiment.
Fig. 13 is a diagram illustrating an example of a user interface screen provided by the support device of the control system according to the embodiment.
Fig. 14 is a diagram illustrating an example of the user interface screen provided by the support device of the control system according to the embodiment.

### DESCRIPTION OF EMBODIMENTS

Hereinafter, an embodiment of the present invention will be described with reference to the drawings. The same or corresponding parts in the drawings are denoted by the same reference signs, and the description thereof will not be repeated.

### <A. Application example>

First, an example of a situation to which the present invention is applied will be described.

A functional configuration example of a control system available for execution of anomaly detection processing according to the embodiment will be described.

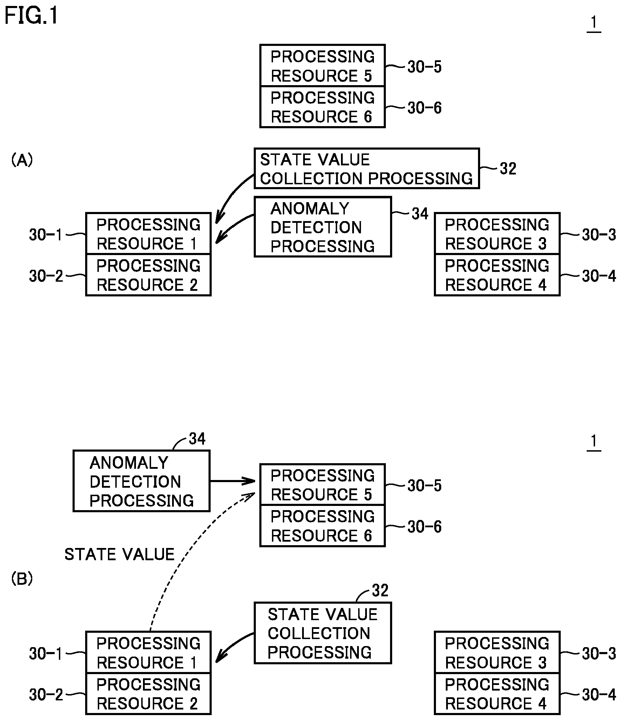

Fig. 1 is a schematic diagram illustrating a main part of a control system 1 according to the embodiment. Referring to Fig. 1, control system 1 configured to control a control target includes, for example, a plurality of processing resources 30-1 to 30-6 available for execution of arithmetic processing.

The "processing resource" is herein a term including an entity that can independently execute any arithmetic processing. For example, a single control device such as a programmable logic controller (PLC) may be a "processing resource", or each of processing units (such as a control unit 100 and an auxiliary processing unit 200 described later) constituting the control device may be a "processing resource". The "processing resource" typically includes a memory for developing instructions defined in a program, and a processor for sequentially executing the instructions developed on the memory.

The plurality of processing resources 30-1 to 30-6 included in control system 1 have a function of detecting any anomaly that can occur in any detection target included in the control target.

The "anomaly detection" or "anomaly detection function" herein typically includes detecting something "different from normal" or "different from usual" in the detection target. Typically, a function of determining presence or absence of an anomaly on the basis of a state value collected from the control target at every control cycle is implemented in the plurality of processing resources 30-1 to 30-6.

Specifically, control system 1 implements state value collection processing 32 (including processing of a state value collection 180 to be described later) of collecting one or a plurality of state values corresponding to any detection target included in the control target, and anomaly detection processing 34 (including processing of a score calculation 182 and a determination 184 to be described later) of calculating a value indicating the possibility that an anomaly has occurred in the detection target (typically, a "score" described below) on the basis of a feature value calculated from the one or plurality of state values having been collected.

The "state value" is herein a term including a value that can be observed by any control target (including the detection target), and can include, for example, a physical value that can be measured by any sensor, a state value indicating ON and OFF of a relay, a switch, or the like, a command value such as a position, a speed, or a torque given by the PLC to a servo driver, a variable value used by the PLC for calculation, or the like. A physical value that can be measured by any sensor or a state value indicating ON and OFF of a relay, a switch, or the like can also be referred to as "raw data".

Fig. 1(A) illustrates an example in which state value collection processing 32 and anomaly detection processing 34 are arranged in processing resource 30-1. Fig. 1(B) illustrates an example in which state value collection processing 32 is arranged in processing resource 30-1 and anomaly detection processing 34 is arranged in processing resource 30-5. In the example illustrated in Fig. 1(B), the state value collected by state value collection processing 32 of processing resource 30-1 is transmitted to processing resource 30-5.

As described above, in the embodiment, state value collection processing 32 and anomaly detection processing 34 can be arranged in any processing resource among the plurality of processing resources 30-1 to 30-6.

By adopting such a configuration, in control system 1 according to the embodiment, necessary anomaly detection can be arranged in a necessary location by using the plurality of processing resources included in control system 1.

### <B. Configuration example of control system>

First, a configuration example of control system 1 according to the embodiment will be described.

### (b1: Overall configuration)

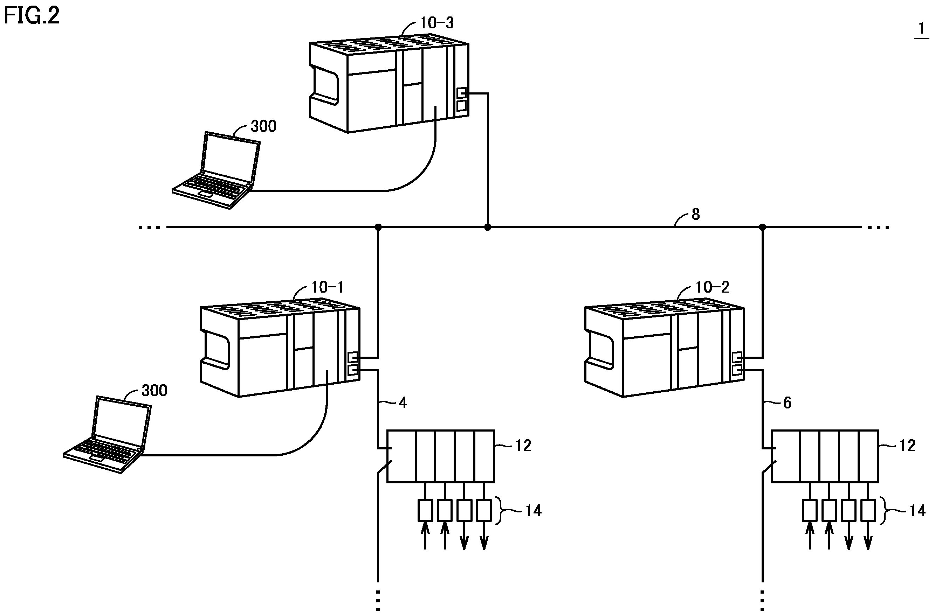

Fig. 2 is a schematic diagram illustrating a configuration example of control system 1 according to the embodiment. Referring to Fig. 2, control system 1 is configured to control the control target, and includes a plurality of control devices 10-1, 10-2, and 10-3 (hereinafter also collectively referred to as a "control device 10") as processing resources.

Control device 10 can execute arithmetic processing, and periodically executes control arithmetic operation for controlling a facility and a machine. Control device 10 collects, as input values, state values of a manufacturing device and a production line as control targets, and individual sensing devices (hereinafter also collectively referred to as "fields"), and outputs a command value (hereinafter also referred to as an "output value") calculated by control arithmetic operation based on the input values to the manufacturing device and the production line as control targets, and individual actuators.

Typically, input values and output values exchanged between control device 10 and the fields are transmitted via field networks 4 and 6. As field networks 4 and 6, it is preferable to adopt networks that perform constant cycle communication that guarantee arrival time of data. EtherCAT (registered trademark) and the like are known as a network that performs such constant cycle communication.

In the configuration example illustrated in Fig. 2, control system 1 includes a remote I/O device 12 connected to control device 10-1 via field network 4, and a remote I/O device 12 connected to control device 10-2 via field network 6. One or a plurality of relays 14 and the like for exchanging signals with a feed are connected to remote I/O device 12.

Control devices 10-1, 10-2, and 10-3 are data-communicably connected to each other via a control network 8. Arbitrary data can be exchanged among control devices 10-1, 10-2, and 10-3.

Each control device of control device 10 includes control unit 100, and if necessary, can also be equipped with auxiliary processing unit 200. A hardware configuration example of support device 300 in addition to control unit 100 and auxiliary processing unit 200 will be described below.

### (b2: Hardware configuration example of control unit 100)

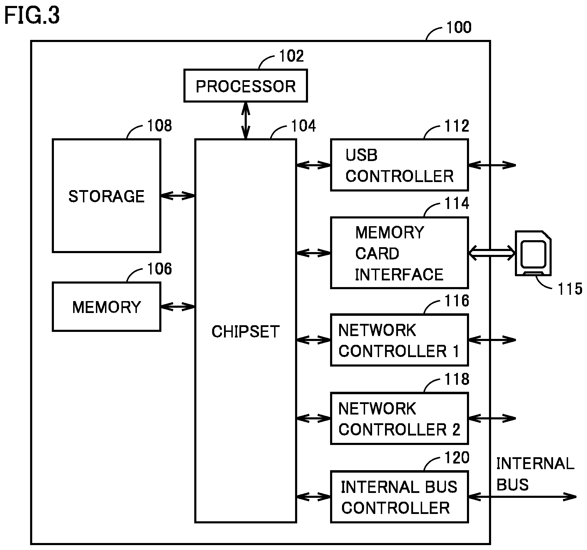

Fig. 3 is a block diagram illustrating a hardware configuration example of control unit 100 constituting control device 10 according to the embodiment. Referring to Fig. 3, control unit 100 includes, as main components, a processor 102 such as a central processing unit (CPU) or a graphical processing unit (GPU), a chipset 104, a memory 106, a storage 108, a universal serial bus (USB) controller 112, a memory card interface 114, network controllers 116 and 118, and an internal bus controller 120.

Processor 102 reads various programs stored in storage 108, develops the programs in memory 106, and executes the programs to implement control arithmetic operation according to standard control and various processing as described later. Chipset 104 mediates the exchange of data between processor 102 and each component, and thus implements the processing of control unit 100 as a whole.

Memory 106 includes a volatile storage such as a dynamic random access memory (DRAM) or a static random access memory (SRAM). Storage 108 includes, for example, a non-volatile storage such as a hard disk drive (HDD) or a solid state drive (SSD).

In addition to a system program, storage 108 stores a control program that operates in an execution environment provided by the system program.

USB controller 112 is in charge of data exchange with any information processing device via USB connection.

A memory card 115 is attachable to and detachable from memory card interface 114, and memory card interface 114 can write data such as a control program and various settings to memory card 115 or read data such as a control program and various settings from memory card 115.

Network controller 116 mediates data exchange with other control devices of control device 10 via control network 8 (see Fig. 2). Network controller 118 mediates data exchange with any device such as remote I/O device 12 (see Fig. 2) via field networks 4 and 6.

Internal bus controller 120 mediates data exchange with other units constituting control device 10 via an internal bus. For the internal bus, a communication protocol unique to a manufacturer may be used, or a communication protocol that is the same as or compliant with a protocol of any industrial network may be used.

Although Fig. 3 illustrates the configuration example in which necessary functions are provided by processor 102 executing the programs, some or all of these provided functions may be implemented by using a dedicated hardware circuit (for example, an application specific integrated circuit (ASIC), a field-programmable gate array (FPGA), or the like. Alternatively, a main part of control unit 100 may be realized by using hardware according to a general-purpose architecture (for example, an industrial personal computer based on a general-purpose personal computer). In this case, a plurality of operating systems (OSs) having different uses may be executed in parallel using a virtualization technology, and necessary applications may be executed on each OS.

### (b3: Hardware configuration example of auxiliary processing unit 200)

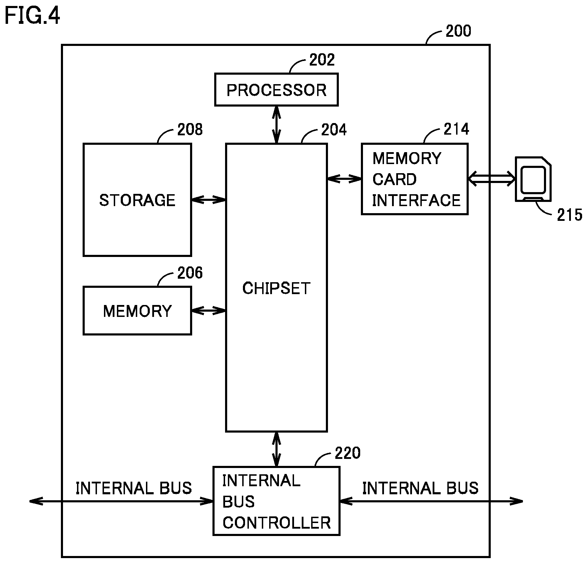

Fig. 4 is a block diagram illustrating a hardware configuration example of auxiliary processing unit 200 constituting control device 10 according to the embodiment. Referring to Fig. 4, auxiliary processing unit 200 includes, as main components, a processor 202 such as a CPU or a GPU, a chipset 204, a memory 206, a storage 208, a memory card interface 214, and an internal bus controller 220.

Processor 202 reads various programs stored in storage 208, develops the programs in memory 206, and executes the programs, and thus implements any arithmetic processing associated with the control arithmetic operation. Chipset 204 mediates data exchange between processor 202 and each component, and thus implements processing of auxiliary processing unit 200 as a whole.

In addition to the system program, storage 208 stores a safety program that operates in an execution environment provided by the system program.

A memory card 215 is attachable to and detachable from memory card interface 214, and memory card interface 214 can write data such as a safety program and various settings to memory card 215 or read data such as a safety program and various settings from memory card 215.

Internal bus controller 220 is in charge of data exchange with control unit 100 via an internal bus.

Although Fig. 4 illustrates the configuration example in which necessary functions are provided by processor 202 executing the programs, some or all of these provided functions may be implemented by using a dedicated hardware circuit (for example, ASIC or FPGA). Alternatively, a main part of auxiliary processing unit 200 may be realized by using hardware according to a general-purpose architecture (for example, an industrial personal computer based on a general-purpose personal computer). In this case, a plurality of OSs having different uses may be executed in parallel using a virtualization technology, and necessary applications may be executed on each OS.

### (b4: Hardware configuration example of support device 300)

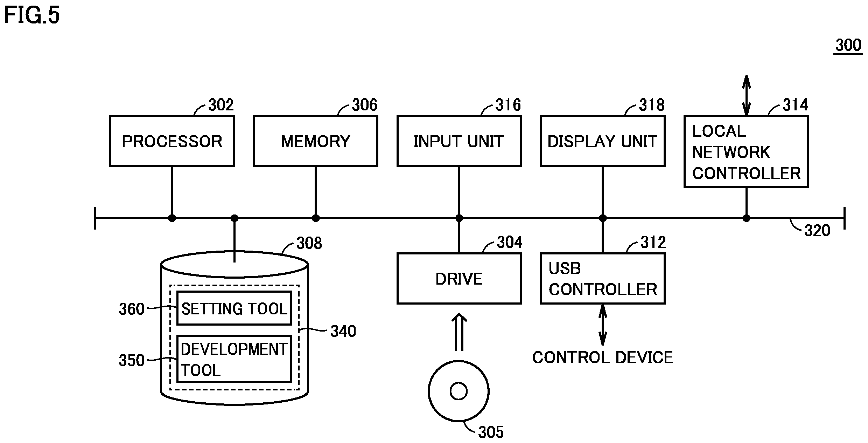

Fig. 5 is a block diagram illustrating a hardware configuration example of support device 300 used in control system 1 according to the embodiment. For example, support device 300 is realized by executing a program using hardware according to a general-purpose architecture (for example, a general-purpose personal computer).

Referring to Fig. 5, support device 300 includes a processor 302 such as a CPU or an MPU, a drive 304, a memory 306, a storage 308, a USB controller 312, a local network controller 314, an input unit 316, and a display unit 318. These components are connected via a bus 320.

Processor 302 reads various programs stored in storage 308, develops the programs in memory 306, and executes the programs to implement various processing as described later.

Storage 308 includes, for example, a hard disk drive (HDD), a solid state drive (SSD), or the like. Storage 308 stores a support program 340 for realizing support device 300. Specifically, storage 308 stores various programs including a development tool 350 for creating a user program executed in support device 300, debugging the created program, defining a system configuration, setting various parameters, and the like, and a setting tool 360. Support program 340 includes development tool 350 and setting tool 360. Storage 308 may further store an OS and other necessary programs.

Drive 304 can write data to a storage medium 305 and read various data (user program, trace data, time series data, or the like) from storage medium 305. Storage medium 305 includes, for example, storage medium 305 (for example, an optical storage medium such as a digital versatile disc (DVD)) that non-transiently stores a computer-readable program (typically, support program 340).

Various programs executed by support device 300 (typically, support program 340) may be installed via computer-readable storage medium 305, or may be installed by being downloaded from a server device or the like on a network. In some cases, a function provided by support device 300 is realized by using a part of modules provided by the OS.

USB controller 312 mediates data exchange with control unit 100 or auxiliary processing unit 200 via USB connection. Local network controller 314 controls data exchange with other devices via any network.

Input unit 316 includes a keyboard, a mouse, and the like, and receives a user operation. Display unit 318 includes a display, various indicators, and the like, and outputs processing results and the like from processor 302. A printer may be connected to support device 300.

Although Fig. 5 illustrates the configuration example in which necessary functions are provided by processor 302 executing the programs, some or all of these provided functions may be implemented by using a dedicated hardware circuit (for example, ASIC or FPGA).

### <C. Anomaly detection function>

Next, an anomaly detection function implemented in control system 1 according to the embodiment will be described.

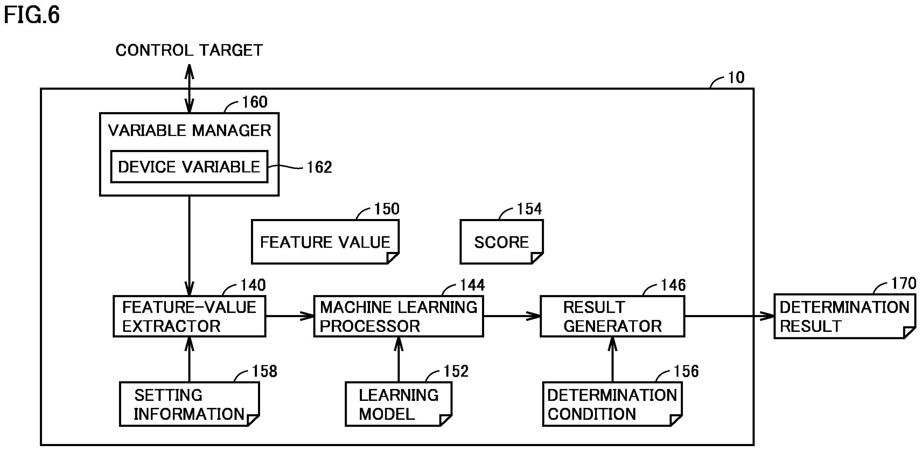

Fig. 6 is a block diagram illustrating a configuration example for realizing an anomaly detection function in control system 1 according to the embodiment. Referring to Fig. 6, control device 10 includes a variable manager 160, a feature-value extractor 140, a machine learning processor 144, and a result generator 146 as anomaly detection functions.

Variable manager 160 collects a state value (input value) appearing in the control target at every control cycle determined in advance, and updates a value of a device variable 162 as an internal state value. Note that the present invention is not limited to a mode of referring to a value using a "variable", and can also be applied to a mode of directly designating and referring to a physical address of a memory that stores each value or the like.

Characteristic extractor 140 calculates one or a plurality of feature values 150 from one or a plurality of state values (input values) corresponding to the detection target. Specifically, feature-value extractor 140 calculates the one or plurality of feature values 150 (for example, an average value, a maximum value, a minimum value, and the like over a predetermined time) periodically or for each event in accordance with a predetermined calculation procedure on the basis of values (or a temporal change of the value in a unit section) indicated by one or a plurality of designated device variables 162 (state values) in accordance with setting information 158 set in advance. The unit section used by feature-value extractor 140 to calculate feature value 150 is referred to as a "frame" in some cases. The unit section (frame) is arbitrarily set in accordance with operation of the detection target and the like.

Machine learning processor 144 refers to a learning model 152 and calculates a score 154 as a value indicating the possibility that some anomaly has occurred in the detection target, on the basis of the one or plurality of feature values 150 calculated by feature-value extractor 140.

For example, machine learning processor 144 may employ a method of calculating the score corresponding to an input value on the basis of a degree of deviation of the input value with respect to a value group in a hyperspace as an algorithm of anomaly detection. Known methods of detecting an anomaly on the basis of the degree of deviation are a method of detecting an anomaly on the basis of a shortest distance from each point to the value group (k-nearest neighbor method), a local outlier factor (LoF) method of evaluating a distance by including a cluster including the value group, an isolation forest (iForest) method using a score calculated from a path length, and the like.

In a case where learning model 152 includes the feature value at a normal state, it can be determined that there is a higher possibility that some anomaly has occurred in the detection target as the degree of deviation (that is, the score) from learning model 152 is larger. On the other hand, in a case where learning model 152 includes the feature value at an anomalous state, it can be determined that there is a higher possibility that some anomaly has occurred in the detection target as the degree of deviation (that is, the score) from learning model 152 is smaller. Learning model 152 can be determined by a known data mining method.

Result generator 146 generates a determination result 170 indicating whether any anomaly has occurred in the detection target on the basis of score 154 calculated by machine learning processor 144. A determination condition 156 may be set in advance by support device 300. Typically, determination condition 156 includes a threshold range that is set for score 154 and indicates that there is a high possibility that some anomaly has occurred in the detection target. Determination result 170 may be either "OK" indicating that no anomaly has occurred in the detection target or "NG" indicating that some anomaly has occurred in the detection target.

By adopting the above configuration, it is possible to detect occurrence of any anomaly that can occur in any detection target included in the control target. Note that feature-value extractor 140, machine learning processor 144, and result generator 146 may be compiled into a library. In this case, setting information 158, learning model 152, and determination condition 156 are set in the library, and then even a user with poor expertise can easily use the anomaly detection function.

### <D. Securing of processing resources and problem>

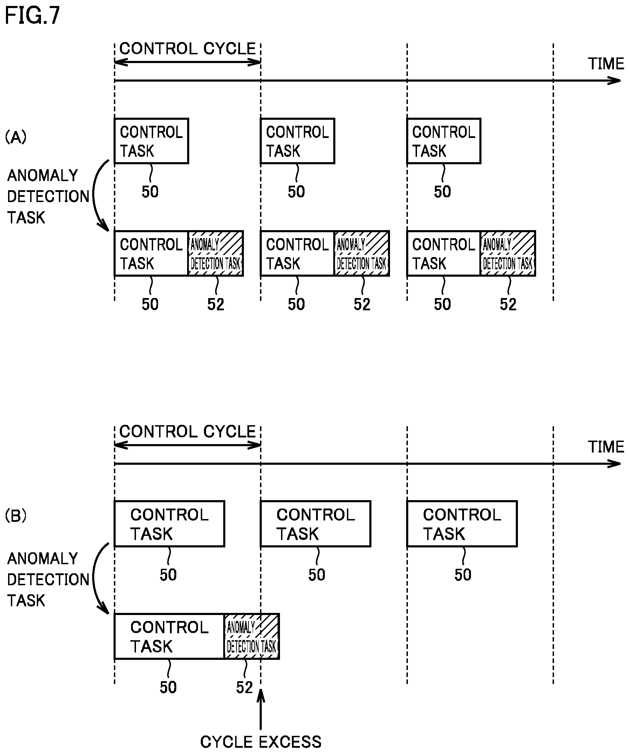

Next, cycle execution of the control arithmetic operation in control device 10 (control unit 100) will be described. Fig. 7 is a time chart for describing an execution cycle of the control arithmetic operation in control device 10 according to the embodiment. Fig. 7(A) illustrates an example in which the anomaly detection processing is executed in control device 10 having the processing resources to spare. As illustrated in Fig. 7(A), in control device 10, a control task 50 (control arithmetic operation) is executed at every control cycle determined in advance. When time required for executing control task 50 is sufficiently short for a length of the control cycle, in a case where anomaly detection task 52 (anomaly detection processing) is further executed, total time can be equal to or less than the length of the control cycle. In an execution state illustrated in Fig. 7(A), both control task 50 and anomaly detection task 52 can be executed at every control cycle.

On the other hand, Fig. 7(B) illustrates an example in which the anomaly detection processing is executed in control device 10 having no processing resource to spare. As illustrated in Fig. 7(B), when the time required for executing control task 50 is relatively long for the length of the control cycle, in a case where anomaly detection task 52 (anomaly detection processing) is further executed, the total time can exceed the length of the control cycle. In an execution state illustrated in Fig. 7(B), both control task 50 and anomaly detection task 52 cannot be executed at every control cycle.

As described above, in a case where the anomaly detection function is to be introduced for preventive maintenance or the like, there is a possibility that the execution of the control arithmetic operation at a constant cycle cannot be secured because the processing resources required for the execution of the anomaly detection are relatively large. In particular, it may be difficult to introduce the anomaly detection function in a control target requiring high responsiveness or the like.

### <E. Distributed arrangement>

As described above, in an environment where sufficient processing resources cannot be secured, introducing the anomaly detection function is difficult in some cases. Control system 1 according to the embodiment can provide a solution to such a problem.

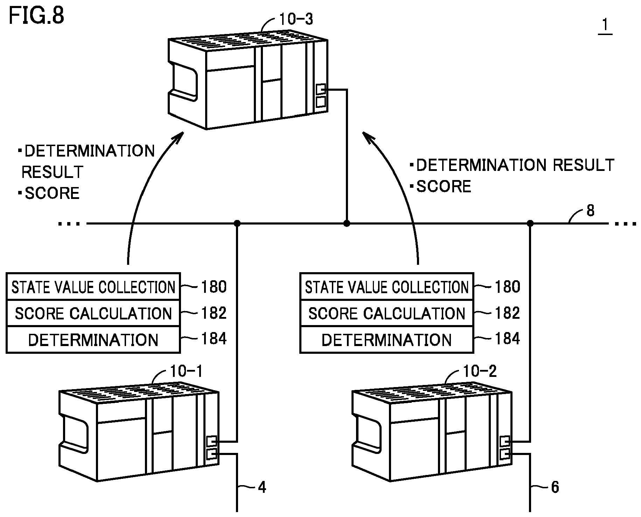

Fig. 8 is a schematic diagram illustrating an implementation example of the anomaly detection function in control system 1 according to the embodiment. Fig. 8 illustrates an example in which the anomaly detection function is implemented in control devices 10-1 and 10-2.

Specifically, in each of control devices 10-1 and 10-2, the processing of state value collection 180, score calculation 182, and determination 184 is executed. State value collection 180 corresponds to the processing in which feature-value extractor 140 (see Fig. 6) collects one or a plurality of state values (input values) corresponding to the detection target. Score calculation 182 corresponds to the processing in which feature-value extractor 140 and machine learning processor 144 calculate score 154 (see Fig. 6). Determination 184 corresponds to the processing in which result generator 146 generates determination result 170 indicating whether any anomaly has occurred in the detection target (see Fig. 6).

State value collection processing 32 (see Fig. 1) includes the processing of state value collection 180 for collecting one or a plurality of state values corresponding to any detection target included in the control target. Anomaly detection processing 34 (see Fig. 1) includes the processing of score calculation 182 for calculating a value (score) indicating a possibility that an anomaly has occurred in the detection target on the basis of a feature value calculated from one or a plurality of collected state values, and the processing of determination 184 for generating determination result 170 indicating whether an anomaly has occurred in the detection target on the basis of a value (score) indicating a possibility that an anomaly has occurred in the detection target.

In the implementation example illustrated in Fig. 8, the anomaly detection function is executed in each of control devices 10-1 and 10-2 independently of each other. Control devices 10-1 and 10-2 can also output the calculated determination results and scores to another control device 10.

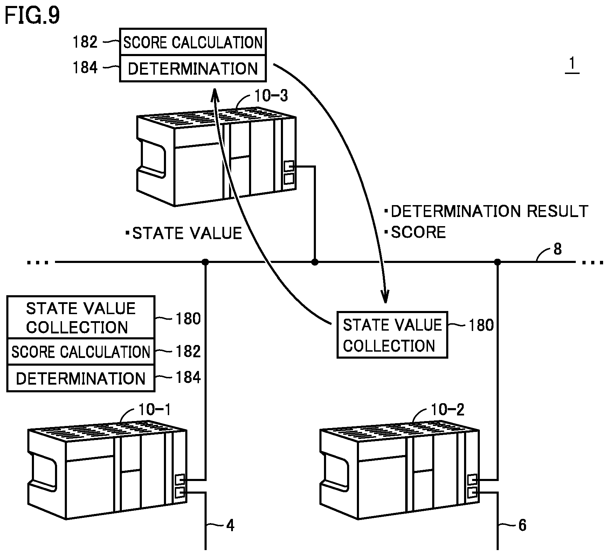

Fig. 9 is a schematic diagram illustrating another implementation example of the anomaly detection function in control system 1 according to the embodiment. Fig. 9 illustrates an example in which control devices 10-2 and 10-3 cooperate to implement the anomaly detection function.

Specifically, in control device 10-2, the processing of state value collection 180 is executed, and one or a plurality of state values corresponding to the detection target is collected. The collected state values (raw data) are transmitted to control device 10-3. Control device 10-3 executes the processing of score calculation 182 and determination 184 on the basis of the state values from control device 10-2. The determination results and scores calculated as a result of these processing are returned from control device 10-3 to control device 10-2. Control device 10-2 can detect that some anomaly has occurred in the detection target on the basis of the determination result and the score from control device 10-3, and can execute necessary processing in accordance with this detection result.

As illustrated in Fig. 9, in a case where state value collection processing 32 (state value collection 180) and anomaly detection processing 34 (score calculation 182 and determination 184) are arranged in different processing resources (control device 10-2), state value collection processing 32 (state value collection 180) may transmit one or a plurality of collected state values to the processing resource (control device 10-3) in which anomaly detection processing 34 (score calculation 182 and determination 184) is arranged.

In a case where state value collection processing 32 (state value collection 180) and anomaly detection processing 34 (score calculation 182 and determination 184) are arranged in different processing resources (control device 10-2), anomaly detection processing 34 (score calculation 182 and determination 184) may transmit generated determination result 170 to the processing resource (control device 10-3) in which state value collection processing 32 (state value collection 180) is arranged. At this time, anomaly detection processing 34 (score calculation 182 and determination 184) may transmit a value having been calculated and indicating the possibility that an anomaly has occurred in the detection target (score 154) to the processing resource (control device 10-3) in which state value collection processing 32 (state value collection 180) is arranged.

In the configuration example illustrated in Fig. 9, only the processing of state value collection 180 is executed in control device 10-2. Thus, the anomaly detection function can be implemented when there is no processing resource to spare as illustrated in Fig. 7(B).

As illustrated in Fig. 9, the plurality of control devices 10 cooperate to allow the anomaly detection function to be implemented, and thus, for example, control device 10 that does not have a library that provides the anomaly detection can easily use the anomaly detection function. In addition, it is sufficient that one or a plurality of state values corresponding to the detection target is collected and transmitted to another control device 10, and this can minimize a change in a user program or the like executed by control device 10.

Note that Fig. 9 illustrates the configuration example in which two control devices 10 cooperate to implement the anomaly detection function. However, the present invention is not limited to this configuration example, and three or more control devices 10 may cooperate to implement the anomaly detection function.

Figs. 8 and 9 illustrate the configuration example in which the plurality of control devices 10 cooperate to implement the anomaly detection function. However, in some cases, a single control device 10 has a plurality of processing resources independent from each other. In such a case, the plurality of processing resources may cooperate to implement the anomaly detection function.

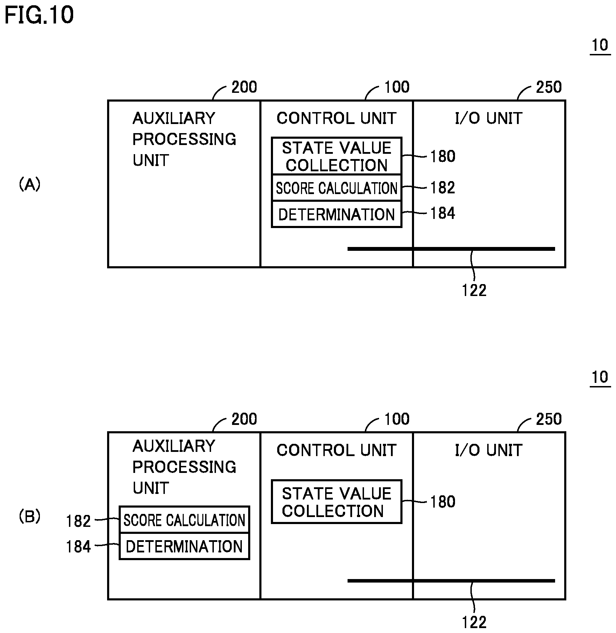

Fig. 10 is a schematic diagram illustrating still another implementation example of the anomaly detection function in control system 1 according to the embodiment. Figs. 10(A) and 10(B) illustrate control device 10 including control unit 100, auxiliary processing unit 200, and one or a plurality of I/O units 250. Both control unit 100 and auxiliary processing unit 200 include a processor, and can execute processing for implementing the anomaly detection function.

Control unit 100 and I/O unit 250 are connected via an internal bus 122, and control unit 100 can collect any state value (input value) collected by I/O unit 250.

Fig. 10(A) illustrates an example in which the anomaly detection function is implemented in control unit 100 of control device 10. Specifically, control unit 100 executes the processing of state value collection 180, score calculation 182, and determination 184.

On the other hand, Fig. 10(B) illustrates an example in which control unit 100 and auxiliary processing unit 200 of control device 10 cooperate to implement the anomaly detection function. Specifically, in control unit 100, the processing of state value collection 180 is executed, and one or a plurality of state values corresponding to the detection target is collected. The collected state value (raw data) is transmitted to auxiliary processing unit 200. In auxiliary processing unit 200, the processing of score calculation 182 and determination 184 is executed on the basis of the state values from control unit 100. The determination result and the score calculated as a result of these processing are returned from auxiliary processing unit 200 to control unit 100. Control unit 100 can detect that some anomaly has occurred in the detection target on the basis of the determination result and the score from auxiliary processing unit 200, and can execute necessary processing in accordance with this detection result.

As illustrated in Figs. 8 to 10, in control system 1 according to the embodiment, the anomaly detection function can be implemented by using a single processing resource, and the anomaly detection function can be implemented by using a plurality of processing resources. That is, each of state value collection 180, score calculation 182, and determination 184 can be arranged in any processing resource among the plurality of processing resources.

By adopting such a flexible implementation system, it is possible to provide a necessary anomaly detection function to necessary control device 10 without greatly changing an existing mechanism (including a user program) for controlling the control target. By adopting such an implementation system, it is possible to limit an influence on the execution of the existing user program.

In addition, in order to implement the anomaly detection function, the anomaly detection function can be implemented only by allocating a necessary function to any processing resource in accordance with a margin or the like without performing a special system design or the like.

### <F. System design procedure>

Next, a system design procedure for arranging the anomaly detection function as described above will be described.

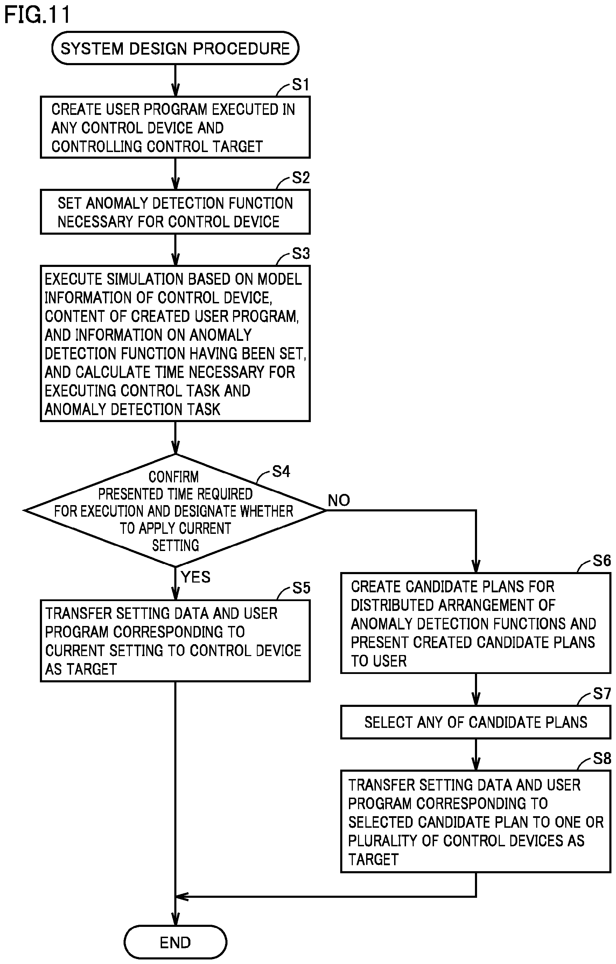

Fig. 11 is a flowchart illustrating an example of the system design procedure in control system 1 according to the embodiment. Processing shown in Fig. 11 is basically executed in support device 300. That is, support device 300 supports determination of a processing resource to be an arrangement destination of state value collection processing 32 (state value collection 180) and anomaly detection processing 34 (score calculation 182 and determination 184).

Referring to Fig. 11, the user creates a user program that is executed in any control device 10 and controls the control target in accordance with a predetermined design specification (step S1). When the creation of the user program is completed, the user sets a necessary anomaly detection function in control device 10 (step S2). Subsequently, when the user instructs execution of a simulation, support device 300 executes the simulation on the basis of information such as model information of control device 10, content of the created user program, and the anomaly detection function having been set, and calculates time necessary for executing control task 50 and anomaly detection task 52 (step S3). The calculated time is presented to the user.

The user confirms the presented time required for execution, and designates whether to apply a current setting (step S4). When the application of the current setting is designated (YES in Step S4), support device 300 transfers setting data, the user program, and the like corresponding to the current setting to control device 10 as a target (step S5). Then, the processing ends.

When change of the current setting is designated (NO in step S4), support device 300 creates candidate plans for distributed arrangement of the anomaly detection functions and presents the created candidate plans to the user (step S6). When the user selects any of the candidate plans (step S7), support device 300 transfers setting data, the user program, and the like corresponding to the selected candidate plan to one or a plurality of control devices 10 as a target (step S8). Then, the processing ends.

As described above, control system 1 according to the embodiment provides a function of supporting design for implementing the anomaly detection function.

When the time required for executing control task 50 and anomaly detection task 52 exceeds the control cycle, control device 10 or control unit 100 and auxiliary processing unit 200, and the like in charge of the anomaly detection function may be designed in consideration of the following factors.
- Number of state values necessary for anomaly detection
- Collection destination (device) of state value necessary for anomaly detection
- Specification of control device 10 (control unit 100 and auxiliary processing unit 200)
- Load factor of internal bus of control device 10
- Load factor of field network connected to control device 10
- Load factor of control network connected to control device 10

As described above, support device 300 determines the arrangement destinations of state value collection processing 32 (state value collection 180) and anomaly detection processing 34 (score calculation 182 and determination 184) on the basis of at least one of the number of state values to be collected, the collection destinations of the state values, the specification of the plurality of processing resources, a load factor of the internal bus, or a load factor of the network.

Basically, as the processing resource in charge of the anomaly detection function, it is preferable to preferentially adopt a processing resource located at a position closer to a generation source of one or a plurality of state values (input values) corresponding to the detection target. When the processing resource includes a plurality of cores, a core in charge of constant cycle processing may be preferentially used. Only when such a processing resource or core cannot be adopted, the processing resource may be used via the network.

For example, processing for a state value having a relatively long task cycle among the one or plurality of state values (input values) corresponding to the detection target may be delegated to another control device 10. In addition, processing for a state value with a low priority may be delegated to another control device 10 on the basis of a priority set in advance by the user.

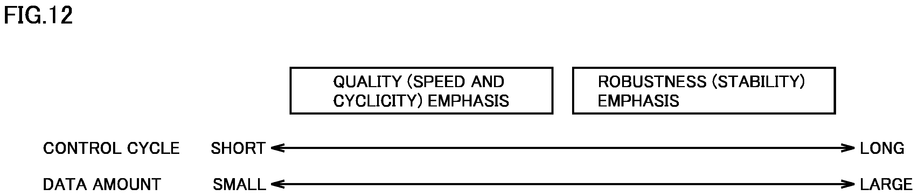

Fig. 12 is a diagram for describing an example of a guideline for determining an implementation example of the anomaly detection function in control system 1 according to the embodiment. Referring to Fig. 12, there are two concepts of quality emphasis and robustness emphasis as the guideline. The quality emphasis prioritizes securing speed and cyclicity, and the robustness emphasis prioritizes stability.

In terms of the control cycle, the quality emphasis is executed with a shorter control cycle than the robustness emphasis. In terms of data amount, in the robustness emphasis, a smaller data amount is processed than in the quality emphasis.

On a user interface screen or the like provided by support device 300, the user may first select which one of the quality emphasis or the robustness emphasis is desired.

For example, when the quality emphasis is selected, it is preferable to preferentially select a processing resource capable of collecting the state value via the internal bus. In addition, selection is preferably made such that the processing resource in charge of the control task is also in charge of the anomaly detection task. By executing the control task and the anomaly detection task by the same processing resource, it is possible to reliably collect necessary information within the same control cycle.

On the other hand, when the robustness emphasis is selected, the execution cycle of the anomaly detection task is possibly relatively long, but the anomaly detection processing can be still reliably executed when the data amount as a target is large. When the robustness emphasis is selected, processing resources connected via the control network or the like can be also selected. However, since a large amount of data is transmitted on the network, it is necessary to investigate a network load and the like in advance. In addition, it may be configured to notify the user of an increase in the network load and receive explicit permission from the user.

When the robustness emphasis is selected, processing resources other than the processing resources in charge of the control task may be used. In the control system as a whole, priority is given to arrangement such that a processing load is evenly distributed.

As exemplified below, support device 300 provides a user interface for supporting determination of a processing resource to be an arrangement destination of state value collection processing 32 (state value collection 180) and anomaly detection processing 34 (score calculation 182 and determination 184).

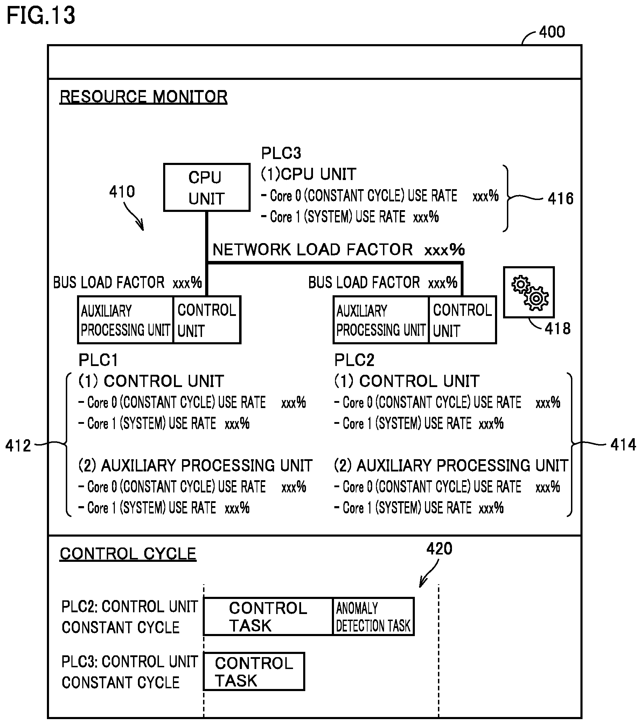

Fig. 13 is a diagram illustrating an example of a user interface screen 400 provided by support device 300 of control system 1 according to the embodiment.

Referring to Fig. 13, user interface screen 400 includes information on a resource monitor indicating a state of a processing resource in control system 1 as a setting target and a control cycle of the processing resource. Specifically, a system configuration 410 of control system 1 as a setting target and use rates 412, 414, and 416 corresponding to the load factors of the processing resources included in each control device 10 are displayed. Use rates 412, 414, and 416 may be values calculated by simulation, or may be actual measurement values when connection to an actual control system is available.

Here, an icon 418 indicating the anomaly detection function set in advance by the user is also displayed on user interface screen 400. The example illustrated in Fig. 13 shows execution by the control unit of "PLC 2".

Execution time of each task is indicated in accordance with a setting of the processing resource for executing the anomaly detection function. Specifically, user interface screen 400 includes an execution time display 420 indicating a task executed for each control unit of each control device and time required for executing each task. A display content of execution time display 420 may be a value calculated by simulation, or may be an actual measurement value when connection to an actual control system is possible.

The user can appropriately adjust the processing resources in charge of the anomaly detection function while referring to user interface screen 400 illustrated in Fig. 13. However, support device 300 can present an appropriate "recommendation" setting such that a user with poor expertise can appropriately implement the anomaly detection function.

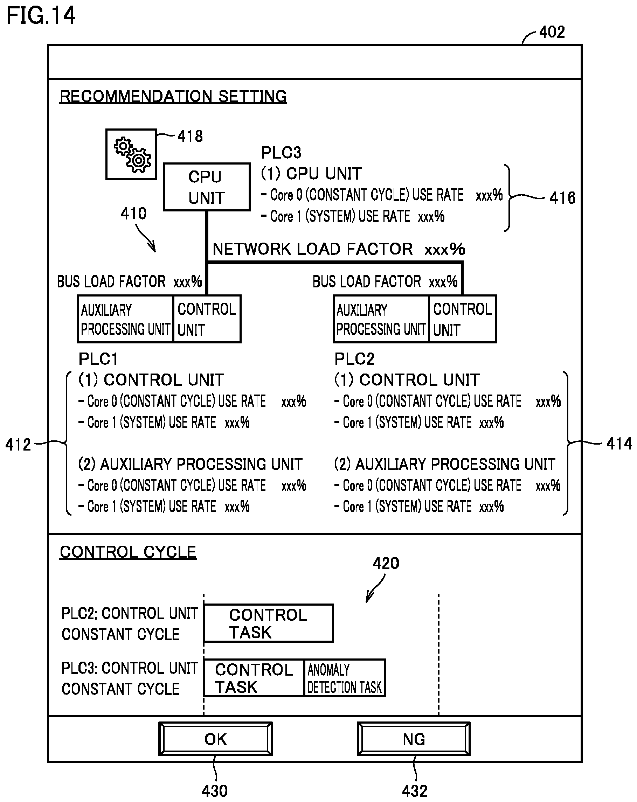

Fig. 14 is a diagram illustrating an example of a user interface screen 402 provided by support device 300 of control system 1 according to the embodiment.

Referring to Fig. 14, "recommendation setting" is displayed on user interface screen 402 in comparison with the state illustrated in Fig. 13. On user interface screen 402 shown in Fig. 14, icon 418 indicating the anomaly detection function is associated with "PLC 3", and this indicates that the anomaly detection processing is executed in control unit 100 of "PLC 3".

The display content of execution time display 420 is also updated with a change of the processing resource in charge of the anomaly detection processing.

An "OK" button 430 or an "NG" button 432 is displayed at a bottom of user interface screen 402. When the user selects "OK" button 430, support device 300 reflects a display content of user interface screen 402. Specifically, support device 300 generates an execution file and various settings to be written to control device 10 as a target (control unit 100 and auxiliary processing unit 200) in accordance with the reflected contents, and sequentially writes the execution file and various settings. In addition, setting information 158, learning model 152, and determination condition 156 (see Fig. 6) are transmitted from support device 300 to control device 10 as a target. When a capacity of the data to be transmitted is large, an optimum transmission method may be determined in consideration of the load factor of the network and the like.

Thus, support device 300 transmits necessary data to the processing resources in which state value collection processing 32 (state value collection 180) and anomaly detection processing 34 (score calculation 182 and determination 184) are to be arranged.

At this time, a variable transmitted to another control device 10 or the like via the control network or the like may be automatically set as a public variable.

Setting contents automatically determined in consideration of the above-described factors can be presented to the user, and the user can further change the presented setting contents.

Note that, in a case where the quality emphasis is selected, it is preferable that, as a default, determination result 170 and score 154 are returned to control device 10 as a transmission source when the state value is configured in a setting to be transmitted from one control device 10 to another control device 10. On the other hand, in a case where the robustness emphasis is selected, it is preferable that, as a default, determination result 170 and score 154 are transmitted to control device 10 on an upper order. Alternatively, this setting may also be arbitrarily selected by the user.

There is also a need to detect an anomaly that can occur in the control target using a combination of a plurality of determination results 170. In this case, cycles and the like of a plurality of the anomaly detection tasks may be adjusted to coincide with each other.

Further, the state of each processing resource may be confirmed after setting is performed in actual control system 1 in accordance with the setting determined by the simulation. When the state of each processing resource in actual control system 1 is different from the state calculated by the simulation, resetting may be performed.

### <G. Appendix>

The embodiment as described above includes the following technical ideas.

### [Configuration 1]

A control system (1) configured to control a control target, the control system comprising:
a plurality of processing resources (10; 100, 200) available for execution of arithmetic processing,
wherein the plurality of processing resources comprise
   collection means (32; 180) configured to collect one or a plurality of state values corresponding to any detection target included in the control target, and
   anomaly detection means (34; 184, 186) configured to calculate a value (154) indicating a possibility that an anomaly has occurred in the detection target based on a feature value calculated from the one or plurality of state values having been collected, and
each of the collection means and the anomaly detection means is to be arranged in a processing resource among the plurality of processing resources.

### [Configuration 2]

The control system according to configuration 1, in which the anomaly detection means generates a determination result (170) indicating whether an anomaly has occurred in the detection target based on the value indicating the possibility that an anomaly has occurred in the detection target.

### [Configuration 3]

The control system according to configuration 2, in which in a case where the collection means and the anomaly detection means are arranged in different processing resources, the anomaly detection means transmits the determination result having been generated to the processing resource in which the collection means is arranged.

### [Configuration 4]

The control system according to any one of configurations 1 to 3, in which in a case where the collection means and the anomaly detection means are arranged in different processing resources, the collection means transmits the one or plurality of state values having been collected to the processing resource in which the anomaly detection means is arranged.

### [Configuration 5]

The control system according to any one of configurations 1 to 4, in which in a case where the collection means and the anomaly detection means are arranged in different processing resources, the anomaly detection means transmits the value having been calculated and indicating the possibility that an anomaly has occurred in the detection target to the processing resource in which the collection means is arranged.

### [Configuration 6]

The control system according to any one of configurations 1 to 5, further including a support device (300) configured to support determination of a processing resource to be an arrangement destination of the collection means and the anomaly detection means.

### [Configuration 7]

The control system according to configuration 6, in which the support device determines the arrangement destination of the collection means and the anomaly detection means based on at least one of a number of state values to be collected by the collection means, a collection destination of the state values, a specification of the plurality of processing resources, a load factor of an internal bus, or a load factor of a network.

### [Configuration 8]

The control system according to configuration 6 or 7, in which the support device transmits necessary data to a processing resource in which the collection means and the anomaly detection means are to be arranged.

### [Configuration 9]

A support device (300) used in a control system (1) configured to control a control target, wherein
the control system comprises a plurality of processing resources (10; 100, 200) available for execution of arithmetic processing,
the plurality of processing resources comprise
   collection means (32; 180) configured to collect one or a plurality of state values corresponding to a detection target included in the control target, and
   anomaly detection means (34; 184, 186) configured to calculate a value (154) indicating a possibility that an anomaly has occurred in the detection target based on a feature value calculated from the one or plurality of state values having been collected, and
the support device provides a user interface (400, 402) configured to support determination of a processing resource to be an arrangement destination of the collection means and the anomaly detection means.

### [Configuration 10]

A support program (340) configured to realize a support device (300) used in a control system (1) configured to control a control target, wherein
the control system comprises a plurality of processing resources (10; 100, 200) available for execution of arithmetic processing,
the plurality of processing resources comprise
   collection means (32; 180) configured to collect one or a plurality of state values corresponding to a detection target included in the control target, and
   anomaly detection means (34; 184, 186) configured to calculate a value (154) indicating a possibility that an anomaly has occurred in the detection target based on a feature value calculated from the one or plurality of state values having been collected, and
the support program causes a computer to implement a function of providing a user interface (400, 402) configured to support determination of a processing resource to be an arrangement destination of the collection means and the anomaly detection means.

### <H. Advantages>

In control system 1 according to the embodiment, the anomaly detection function can be implemented in an appropriate processing resource in accordance with the margin of each processing resource (including the load factor of the network). Therefore, a necessary anomaly detection function can be implemented at a necessary position without hindering execution of the user program for controlling the control target. In addition, since a processing resource having a margin can implement the anomaly detection function, it is possible to avoid a situation in which task execution exceeds the control cycle. That is, by implementing the anomaly detection function at an appropriate position, it is possible to maintain constant cyclicity of task execution in each processing resource as much as possible.

In control system 1 according to the embodiment, since the anomaly detection function can be implemented at an appropriate position, there is no need to increase a specification of specific control device 10 (control unit 100 and auxiliary processing unit 200), and it is possible to lower a setting restriction of the processing resource at an initial setting. In addition, in a case where the anomaly detection function is implemented in existing control system 1, a processing resource with a margin can be used, and thus, there is no need to newly introduce a processing resource or replace the processing resource with a processing resource with a higher specification. This can increase a degree of freedom of design by the user.

In control system 1 according to the embodiment, support device 300 automatically proposes the setting suitable for the implementation of the anomaly detection function, and thus a user having a poor specialized knowledge can implement an anomaly detection function.

It should be understood that the embodiment disclosed herein is illustrative in all respects and not restrictive. The scope of the present invention is defined not by the above description but by the claims, and is intended to include meanings equivalent to the claims and all modifications within the scope.

### REFERENCE SIGNS LIST

1: control system, 2: PLC, 4, 6: field network, 8: control network, 10: control device, 12: remote I/O device, 14: relay, 30: processing resource, 32: state value collection processing, 34: anomaly detection processing, 50: control task, 52: anomaly detection task, 100: control unit, 102, 202, 302: processor, 104, 204: chipset, 106, 206, 306: memory, 108, 208, 308: storage, 112, 312: USB controller, 114, 214: memory card interface, 115, 215: memory card, 116, 118: network controller, 120, 220: internal bus controller, 122: internal bus, 140: feature-value extractor, 144: machine learning processor, 146: result generator, 150: feature value, 152: learning model, 154: score, 156: determination condition, 158: setting information, 160: variable manager, 162: device variable, 170: determination result, 180: state value collection, 182: score calculation, 184: determination, 200: auxiliary processing unit, 250: I/O unit, 300: support device, 304: drive, 305: storage medium, 314: local network controller, 316: input unit, 318: display unit, 320: bus, 340: support program, 350: development tool, 360: setting tool, 400, 402: user interface screen, 410: system configuration, 412, 414, 416: use rate, 418: icon, 420: execution time display, 430, 432: button.

## Claims

1. A control system configured to control a control target, the control system comprising:
a plurality of processing resources available for execution of arithmetic processing,
wherein the plurality of processing resources comprise
collection means configured to collect one or a plurality of state values corresponding to a detection target included in the control target, and
anomaly detection means configured to calculate a value indicating a possibility that an anomaly has occurred in the detection target based on a feature value calculated from the one or plurality of state values having been collected, and
each of the collection means and the anomaly detection means is capable of being arranged in a processing resource among the plurality of processing resources.

2. The control system according to claim 1, wherein the anomaly detection means generates a determination result indicating whether an anomaly has occurred in the detection target based on the value indicating the possibility that an anomaly has occurred in the detection target.

3. The control system according to claim 2, wherein in a case where the collection means and the anomaly detection means are arranged in different processing resources, the anomaly detection means transmits the determination result having been generated to the processing resource in which the collection means is arranged.

4. The control system according to any one of claims 1 to 3, wherein in a case where the collection means and the anomaly detection means are arranged in different processing resources, the collection means transmits the one or plurality of state values having been collected to the processing resource in which the anomaly detection means is arranged.

5. The control system according to any one of claims 1 to 4, wherein in a case where the collection means and the anomaly detection means are arranged in different processing resources, the anomaly detection means transmits the value having been calculated and indicating the possibility that an anomaly has occurred in the detection target to the processing resource in which the collection means is arranged.

6. The control system according to any one of claims 1 to 5, further comprising a support device configured to support determination of a processing resource to be an arrangement destination of the collection means and the anomaly detection means.

7. The control system according to claim 6, wherein the support device determines the arrangement destination of the collection means and the anomaly detection means based on at least one of a number of state values to be collected by the collection means, a collection destination of the state values, a specification of the plurality of processing resources, a load factor of an internal bus, or a load factor of a network.

8. The control system according to claim 6 or 7, wherein the support device transmits necessary data to a processing resource in which the collection means and the anomaly detection means are to be arranged.

9. A support device used in a control system configured to control a control target, wherein
the control system comprises a plurality of processing resources available for execution of arithmetic processing,
the plurality of processing resources comprise
collection means configured to collect one or a plurality of state values corresponding to a detection target included in the control target, and
anomaly detection means configured to calculate a value indicating a possibility that an anomaly has occurred in the detection target based on a feature value calculated from the one or plurality of state values having been collected, and
the support device provides a user interface configured to support determination of a processing resource to be an arrangement destination of the collection means and the anomaly detection means.

10. A support program configured to realize a support device used in a control system configured to control a control target, wherein
the control system comprises a plurality of processing resources available for execution of arithmetic processing,
the plurality of processing resources comprise
collection means configured to collect one or a plurality of state values corresponding to a detection target included in the control target, and
anomaly detection means configured to calculate a value indicating a possibility that an anomaly has occurred in the detection target based on a feature value calculated from the one or plurality of state values having been collected, and
the support program causes a computer to implement a function of providing a user interface configured to support determination of a processing resource to be an arrangement destination of the collection means and the anomaly detection means.
